# EUROPÄISCHE PATENTSCHRIFT

(11) **EP 0 802 292 B1**
(45) Veröffentlichungstag und Bekanntmachung des Hinweises auf die Patenterteilung: **27.11.2002**
(21) Anmeldenummer: 97111881.5
(22) Anmeldetag: 30.08.1995
(51) Int. Cl.: E05D 5/02, F16B 37/04

(54) **Klemmvorrichtung zum Befestigen eines Beschlagteils und Verfahren zur Herstellung einer derartigen Klemmvorrichtung**
Clamping device for mounting a fitting element and method for manufacturing such a clamping device
Dispositif de fixation par serrage pour la fixation d'une pièce de ferrure et procédé de fabrication d'un tel dispositif de fixation par serrage

(30) Priorität: 02.09.1994 DE 9414237 U; 02.09.1994 DE 4431278
(43) Veröffentlichungstag der Anmeldung: 22.10.1997
(62) Teilanmeldung aus: 95113612.6
(73) Patentinhaber: ROTO FRANK Aktiengesellschaft, 70771 Leinfelden-Echterdingen (DE)
(72) Erfinder: Röder, Erwin, 73340 Amstetten (DE); Striggow, Uwe, 70794 Filderstadt (DE)

(56) Entgegenhaltungen:
- DE-U- 9 100 094

## Beschreibung

Die Erfindung betrifft eine Klemmvorrichtung zum Befestigen eines Beschlagteils an einer wenigstens eine Hinterschneidung aufweisenden Nut am Rahmen eines Fensters, einer Tür od. dgl., wobei die Nut eine Nutöffnung und einen Nutgrund aufweist und die Nutöffnung von Nutbegrenzungen in Form eines mit Abstand vom Nutgrund angeordneten Querstegs sowie eines dem Quersteg im.Abstand der Nutöffnung gegenüberliegenden Stegs begrenzt ist, mit einem an der dem Nutgrund zugewandten Unterseite des Querstegs abstützbaren Klemmstück sowie mit wenigstens einer mittels einer Spannvorrichtung gegen letzteres spannbaren Befestigungsplatte, wobei das Klemmstück an der Befestigungsplatte relativ zu dieser schwenkbar gelagert und die Befestigungsplatte über eine erste Auflagefläche an der dem Klemmstück abgewandten Seite des Querstegs und über eine zweite, insbesondere an ihrem freien Ende angeordnete Auflagefläche ebenfalls am Rahmen abstützbar ist. Die Erfindung betrifft weiterhin ein Verfahren zur Herstellung einer derartigen Klemmvorrichtung.

Aus dem Stand der Technik nach DE-U-91 00 094.7 ist eine gattungsgemäße Klemmvorrichtung bekannt, im Falle derer Klemmstück und Befestigungsplatte an beiden im Abstand voneinander angeordneten und die Nutöffnung begrenzenden Querstegen eines Rahmenprofils festgelegt sind. Beide Querstege werden dabei von dem Klemmstück der Klemmvorrichtung hinter- und von der Befestigungsplatte der Klemmvorrichtung übergriffen. Nachteiligerweise sind dementsprechend Befestigungsplatte und Klemmstück der vorbekannten Klemmvorrichtung in ihren Abmessungen exakt auf die Weite der Nutöffnung abzustimmen, an welcher sie zum Einsatz kommen sollen.

Weiterhin gehört dem Stand der Technik eine Klemmvorrichtung an, wie sie in der Druckschrift DE-U-1 957 655 offenbart ist. Auch diese Vorrichtung umfaßt ein in Einbaulage beide Begrenzungsstege einer Nutöffnung an einem Rahmenprofil hintergreifendes Klemmstück, das mittels einer Befestigungsschraube gegen eine Befestigungsplatte gespannt wird, die auf der dem Klemmstück gegenüberliegenden Seite der Begrenzungsstege aufliegt. Zusätzlich ist die vorbekannte Befestigungsplatte außerhalb der durch die genannten Begrenzungsstege definierten Nut auf dem Grund einer weiteren, der genannten Nut benachbarten Profilnut abgestützt. Im Umfang ihres Klemmstücks ist auch die Klemmvorrichtung gemäß DE-U-1 957 655 entsprechend der zugehörigen Rahmennut zu dimensionieren.

Der Erfindung liegt nun die Aufgabe zugrunde, eine Klemmvorrichtung zu schaffen, die an Rahmennuten mit unterschiedlichen Nutöffnungsweiten eingesetzt werden kann sowie ein einfaches Verfahren zur Herstellung derart weiterentwickelter Klemmvorrichtungen bereitzustellen.

Die vorrichtungsbezogene Aufgabe wird erfindungsgemäß dadurch gelöst, daß im Falle einer Klemmvorrichtung der eingangs genannten Art das Klemmstück von den Nutbegrenzungen lediglich an dem Quersteg und die Befestigungsplatte über die zweite Auflagefläche zwischen dem Quersteg sowie dem letzterem gegenüberliegenden Steg am Nutgrund abstützbar ist, wobei das Klemmstück an der ihm zugewandten Seite der Befestigungsplatte gelagert ist. Aufgrund der beschriebenen Ausbildung kann die erfindungsgemäße Klemmvorrichtung an Nuten mit unterschiedlicher Nutöffnungsweite verwendet werden, ohne daß eine Breitenanpassung der Befestigungsplatte und/oder des Klemmstücks erforderlich wäre. Dementsprechend ist die Klemmbefestigung des Beschlagteils unabhängig von der Weite der Nutöffnung möglich. Besonders zweckmäßig ist der Einsatz der erfindungsgemäßen Klemmvorrichtung an Nuten mit großen Öffnungsweiten.

Eine Ausführungsform erfindungsgemäßer Klemmvorrichtungen zeichnet sich dadurch aus, daß die zweite Auflagefläche an einer in Montagelage in die Nutöffnung gegen den Nutgrund ragenden Stützleiste der Befestigungsplatte vorgesehen ist. Anders als bei herkömmlichen Klemmvorrichtungen dient auch an dieser Ausführungsform der Erfindung nicht mehr der zweite, die Nutöffnung begrenzende Steg sondern vielmehr die genannte Stützleiste als Auflage für das Beschlagteil.

In Weiterbildung der Erfindung ist die Befestigungsplatte an der zweiten Auflagefläche über einen sich am Nutgrund abstützenden Distanzkörper an dem Nutgrund abstützbar. Durch die zweiteilige Ausbildung der Befestigungsplatte und deren zweiter Abstützung wird die Möglichkeit eröffnet, die Klemmvorrichtung problemlos auch an unterschiedliche Nuttiefen anzupassen. Ein Wechsel der Nuttiefe bedingt lediglich die Verwendung eines in seiner Höhe entsprechend bemessenen Distanzkörpers, während die übrigen Teile der Klemmvorrichtung unverändert verwendet werden können.

Eine bevorzugte Ausführungsform der erfindungsgemäßen Klemmvorrichtung zeichnet sich dadurch aus, daß der Distanzkörper über eine dünne und eine Dehnfalte aufweisende Querwandung mit dem Klemmstück verbunden ist und letzteres mit einer Rundung in einer entsprechenden Kehlung an der ihm zugewandten Seite der Befestigungsplatte relativ zu dieser schwenkbar abgestützt ist. Der Distanzkörper liegt einerseits am Nutgrund an und lagert andererseits an seiner dem Nutgrund abgewandten Seite die Befestigungsplatte mit deren zweiter Auflagefläche. Beim Betätigen der Spannvorrichtung verschwenkt das Klemmstück aus seiner Montage-Ausgangslage gegen die Befestigungsplatte. Dabei wird das Klemmstück durch das von seiner Rundung und der Kehlung an der Befestigungsplatte gebildete drehgelenkartige Lager auf einer definierten Bahn geführt. Im Laufe der Schwenkbewegung des Klemmstücks bewegt sich auch der an diesem vorgesehene Befestigungsbereich der Querwandung auf einer Kreisbahn um das Schwenklager des Klemmstücks. Damit verbunden ist eine Relativbewegung zwischen dem Befestigungsbereich der Querwandung und dem beim Betätigen der Spannvorrichtung ortsfest fixierten Distanzkörper. Die in der Querwandung vorgesehene Dehnfalte sorgt dafür, daß die Bewegung zwischen Klemmstück und ortsfestem Distanzkörper ohne eine nennenswerte Gegenkraft ausgeführt werden kann. Die Dehnfalte gewährleistet also trotz einstückiger Ausbildung von Distanzkörper und Klemmstück eine freie Beweglichkeit des letztgenannten Bauteils.

Damit der Distanzkörper beim Betätigen der Spannvorrichtung trotz der Relativbewegung des Klemmstücks ortsfest fixiert bleibt, ist eine dem Nutgrund zugewandte Unterfläche des Distanzkörpers mit Kerbvorsprüngen versehen, mit denen sich der Distanzkörper in den Grund der Beschlagteilnut eingraben kann.

Die Höhe des Distanzkörpers senkrecht zum Nutgrund entspricht zweckmäßigerweise in etwa der Höhe der von einer Seitenwand der Nut und dem Quersteg gebildeten Nutbegrenzung.

Die Rundung an dem Klemmstück ist in vorteilhafter Weiterbildung der Erfindung an einem Kupplungssteg in Form einer von einem Grundkörper des Klemmstücks vorstehenden Spannleiste vorgesehen.

Im Falle von Klemmvorrichtungen, deren Klemmstück über einen Kupplungssteg an der Befestigungsplatte relativ zu dieser schwenkbar gelagert ist, sind erfindungsgemäß das Klemmstück, die Befestigungsplatte und der Kupplungssteg aus Gründen der Herstellungsvereinfachung materialeinheitlich hergestellt. Dadurch wird die Möglichkeit eröffnet, die genannten Bauteile in Baueinheit und in einem einzigen Arbeitsgang zu fertigen.

Dabei empfiehlt es sich, wie erfindungsgemäß vorgesehen, das Klemmstück, die Befestigungsplatte und den Kupplungssteg als Strangpreßprofil einstückig herzustellen. Befestigungsplatte und Klemmstück lassen sich gemeinsam mit dem diese beiden Bauteile miteinander verbindenden Kupplungssteg durch einen Extrudiervorgang fertigen. Infolgedessen bilden die genannten Einzelteile von der Herstellung an einen einstückigen, materialeinheitlichen Bauelementesatz. Dementsprechend sind im Falle der Erfindung nicht mehr verschiedene Bauteile getrennt herzustellen und anschließend zusammenzufügen. Darüber hinaus kann auch die auf die Herstellung folgende Nachbearbeitung von Klemmstück, Befestigungsplatte und Kupplungssteg parallelisiert werden. Für den Verarbeiter ist der Einbau der Klemmvorrichtung in die hinterschnittene Beschlagteilnut durch das Zusammenhängen der Vorrichtungskomponenten vereinfacht.

An einer in der Herstellung besonders einfachen Klemmvorrichtung sind das Klemmstück, die Befestigungsplatte und der Kupplungssteg als Bauelementesatz von einem Profilstrang abgelängt. Mit einem Schnitt sind die Einzelteile in Baueinheit von einem langen Profilstrang abgetrennt.

In zweckmäßiger Ausgestaltung der Erfindung sind das Klemmstück, die Befestigungsplatte und der Kupplungssteg aus einer Aluminiumlegierung hergestellt.

Im Falle der betreffenden Variante der erfindungsgemäßen Klemmvorrichtung sind das Klemmstück, der Distanzkörper und die Querwandung aus Gründen einer Vereinfachung von Fertigung und Montage materialeinheitlich und einstückig ausgebildet. In Frage kommt beispielsweise die Herstellung der Baueinheit aus den genannten Einzelteilen als Gußteil insbesondere aus Zinkdruckguß.

Bevorzugt wird erfindungsgemäß, daß das Klemmstück, der Distanzkörper und die Querwandung als Strangpreßprofil einstückig hergestellt und insbesondere, daß die aus den genannten Teilen bestehende Baueinheit als Bauelementesatz von einem Profilstrang abgelängt ist. Als Material für einen derartigen Profilstrang kann beispielsweise eine Aluminiumlegierung vorgesehen sein.

Eine für die Strangpreßfertigung besonders geeignete Ausführungsform der erfindungsgemäßen Klemmvorrichtung zeichnet sich dadurch aus, daß die Querwandung angrenzend an eine Bodenseite des Grundkörpers des Klemmstücks angeordnet ist.

Die obengenannte verfahrensbezogene Aufgabe wird erfindungsgemäß dadurch gelöst, daß im Laufe eines Verfahrens zur Herstellung einer erfindungsgemäßen Klemmvorrichtung die Befestigungsplatte, das Klemmstück und der Kupplungssteg durch eine gemeinsame Düse zusammenhängend und materialeinheitlich in Form eines Profilstrangs stranggepreßt werden, daß vor oder nach dem anschließenden Abtrennen von aus einer Befestigungsplatte, einem Klemmstück und einem Kupplungssteg bestehenden Bauelementesätzen vom Profilstrang dieser in diejenige Lage gebracht wird, in der die Befestigungsplatte, das Klemmstück und der Kupplungssteg bzw. die für diese Bauteile vorgesehenen Teile des Profilstrangs in etwa ihre Einbaulage zueinander einnehmen und daß dann für jeden Bauelementesatz in der Befestigungsplatte eine insbesondere mit einer Senkung versehene Durchgangsbohrung für eine Spannschraube der Klemmvorrichtung und im Klemmstück eine Gewindebohrung für die Spannschraube hergestellt und abschließend die Spannschraube eingedreht wird. Das Eindrehen der Spannschraube kann alternativ auch als Teil der Montage erst am Montageort vorgenommen werden.

Bei einer besonders vorteilhaften Variante des erfindungsgemäßen Verfahrens werden die Durchgangsbohrung und die Gewindebohrung für die Spannschraube in einem Arbeitsgang gefertigt. Von Vorteil ist weiterhin die Fertigung der genannten Bohrungen für die Spannschraube mit einem einzigen Werkzeug.

Im Sinne der Erfindung sind nach dem Extrudieren des Profilstrangs lediglich noch zwei Bearbeitungsschritte erforderlich, nämlich das Ablängen der Bauelementesätze vom Profilstrang und vorher oder nachher die gemeinsame Fertigung der Bohrungen für die Spannschraube. Zur montagegerechten Vervollständigung des Beschlagelementesatzes ist anschließend lediglich noch die Spannschraube in die zugeordnete Gewindebohrung des Klemmstücks einzudrehen.

Die Erfindung wird nachfolgend anhand schematischer Darstellungen zu Ausführungsbeispielen näher erläutert. Es zeigen:
- Fig. 1a: den Rohling für eine erste Ausführungsform einer Klemmvorrichtung im Querschnitt,
- Fig. 1b: die Klemmvorrichtung nach Figur 1a in der Montage-Endlage und
- Fig. 2: eine an einem Fenster montierte zweite Ausführungsform einer Klemmvorrichtung im Querschnitt.

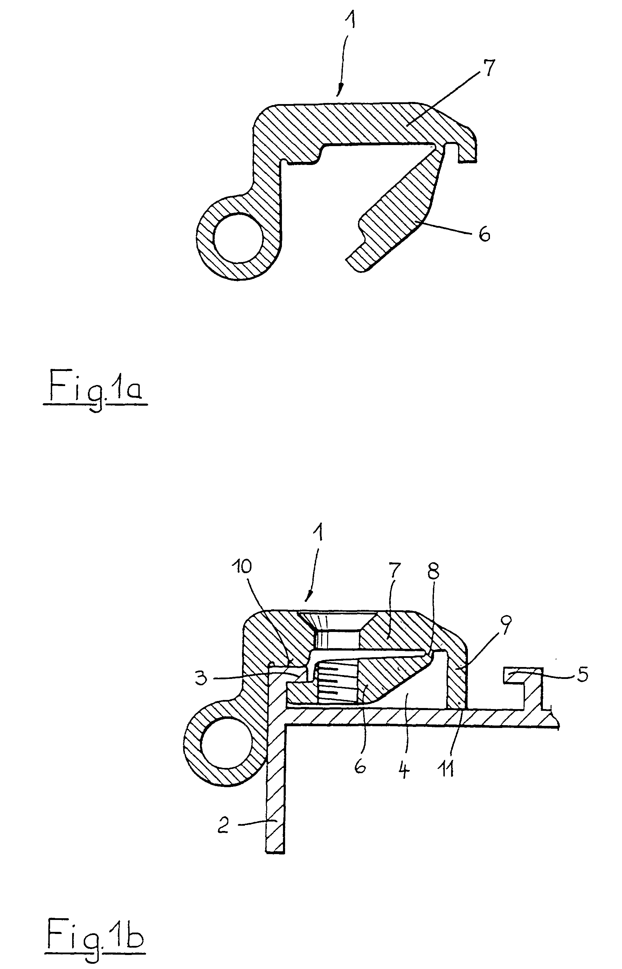

Gemäß den Figuren 1a und 1b wird zur klemmenden Befestigung eines Beschlagteils 1 an einem Rahmen 2 lediglich ein Quersteg 3, der an einer hinterschnittenen Nut 4 einem Steg 5 gegenüberliegt, genutzt. Zu diesem Zweck ist in der Nut 4 ein Klemmstück 6 angeordnet, das den Quersteg 3 der Nut 4 hintergreift. Das Klemmstück 6 ist über einen Kupplungssteg 8 mit einer Befestigungsplatte 7 relativ zu dieser schwenkbar verbunden.

An der Befestigungsplatte 8 ist eine in Richtung auf den Grund der Nut 4 vorkragende Stützleiste 9 vorgesehen. Die dem Grund der Nut 4 zugewandte Stirnfläche der Stützleiste 9 dient neben einer ersten Auflagefläche 10 als zweite Auflagefläche 11, an welcher die Befestigungsplatte 7 zwischen dem Quersteg 3 und dem Steg 5 am Grund der Nut 4 abgestützt ist. An der ersten Auflagefläche 10 liegt die Befestigungsplatte 7 auf dem zugeordneten Quersteg 3 auf.

Das Klemmstück 6, die Befestigungsplatte 7 sowie der Kupplungssteg 8 werden als Bauelementesatz einstückig und materialeinheitlich gefertigt. Zu diesem Zweck wird zunächst ein in Figur 1a im Schnitt dargestellter Profilstrang nach dem Strangpreßverfahren hergestellt, ehe dann von diesem Strangpreßprofil Bauelementesätze der beschriebenen Art abgelängt werden. Vor oder nach dem Ablängen der Bauelementesätze wird für jeden Bauelementesatz an der Befestigungsplatte 7 eine mit einer Senkung versehene Durchgangsbohrung und am Klemmstück 6 eine Gewindebohrung erbohrt. Zu diesem Zweck werden an dem in Figur 1a gezeigten Profilstrang oder an einem vom Profilstrang abgelängten Rohling für den Bauelementesatz zunächst der später als Klemmstück 6 dienende Bereich sowie der für die Bildung der Befestigungsplatte 7 vorgesehene Teil relativ zueinander so weit verschwenkt, bis sie ihre Einbaulage zueinander einnehmen. Anschließend können an der Befestigungsplatte 7 eine mit einer Senkung versehene Durchgangsbohrung und an dem Klemmstück 6 eine Gewindebohrung in einem Arbeitsgang hergestellt werden. Der Bohrer zur Herstellung der Durchgangsbohrung an der Befestigungsplatte 7 dient auch noch zum Ansenken der Gewindebohrung des Klemmstücks 6.

Nach Abschluß der Bearbeitung des Rohlings werden die Befestigungsplatte 7 und das Klemmstück 6 in die Relativlage gemäß Figur 1a auseinandergespreizt. Nunmehr läßt sich das Klemmstück 6 senkrecht zum Nutgrund in die Nut 4 einführen und mit dem Quersteg 3 der Nut 4 in Hintergriff bringen. Werden anschließend die Bauteile der Klemmvorrichtung gegeneinander verschwenkt, so stellt sich die in Figur 1b gezeigte Montage-Endlage ein, in der sich die Befestigungsplatte 7 sowohl mit der dem Klemmstück 6 an dem Quersteg 3 gegenüberliegenden ersten Auflagefläche 10 als auch mit der an der Stützleiste 9 vorgesehenen zweiten Auflagefläche 11 an dem Rahmen 1 abstützt. Mittels der Spannschraube werden die Befestigungsplatte 7 und das Klemmstück 6 abschließend gegeneinander verspannt. Die Spannschraube zur klemmenden Fixierung des Bauelementesatzes an dem betreffenden Rahmen ist bevorzugtermaßen bereits werksseitig vormontiert, um dadurch dem Verarbeiter die Montage des Beschlagelementesatzes zu erleichtern.

Aufgrund der beschriebenen Ausgestaltung der Befestigungsplatte 7 läßt sich die Klemmvorrichtung nach den Figuren 1a und 1b an Rahmennuten mit wechselnden Nutöffnungsweiten einsetzen, ohne daß zu diesem Zweck konstruktive Anpassungsmaßnahmen getroffen werden müßten.

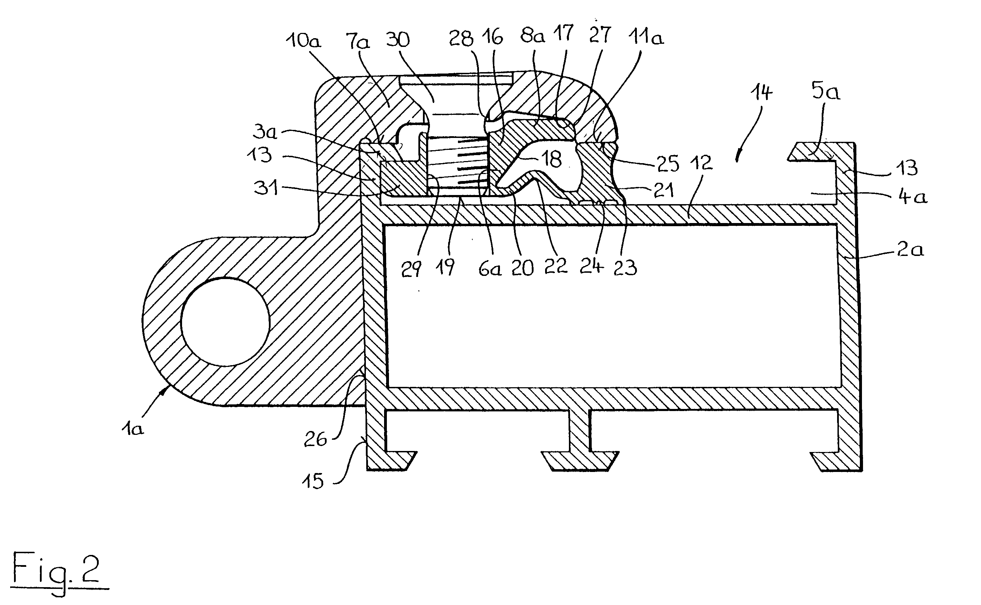

In Figur 2 ist ein Beschlagteil 1a an einem aus einer Aluminiumlegierung bestehenden, mittels eines Strangpreßverfahrens hergestellten Holm eines Rahmens 2a für ein Fenster, eine Tür od. dgl. gezeigt. An seinem Falz ist der Rahmen 2a mit einer hinterschnitten ausgebildeten Nut 4a versehen, die einen etwa T-förmigen Querschnitt aufweist und durch eine Bodenwand 12, Seitenwände 13 sowie durch einen Quersteg 3a und einen diesem gegenüberliegenden Steg 5a begrenzt ist. Der Quersteg 3a sowie der Steg 5a flankieren eine Nutöffnung 14.

Ein Klemmstück 6a ist senkrecht zu der Bodenwand 12 in die Nut 4a eingesetzt worden. Es untergreift mit einer Klemmleiste 31 den Quersteg 3a, der an eine Sichtfläche 15 des Rahmenholms angrenzt. Diagonal gegenüberliegend ist an einen Grundkörper 16 des Klemmstücks 6a eine vorspringende, gegen den Steg 5a gerichtete und einen Kupplungssteg 8a bildende Spannleiste angeformt, welche mit einer Rundung 17 versehen ist. Ein Übergang 18 von dem Kupplungssteg 8a zu einer Bodenseite 19 des Grundkörpers 16 an dem Klemmstück 6a verläuft geneigt in Richtung zur Sichtfläche 15 des Rahmenholms. In unmittelbarer Nähe der Bodenseite 19 schließt sich eine Querwandung 20 an den Grundkörper 16 an, die an einem Stützsteg in Form eines Distanzkörpers 21 endet. Die Querwandung 20 ist dünn ausgebildet und damit beweglich und nachgiebig. Sie ist ferner mit einer Dehnfalte 22 versehen.

Der Distanzkörper 21 trägt an einer Unterseite 23 mehrere Kerbvorsprünge 24 zur Verkrallung mit der Bodenwand 12 der Nut 4a. Die Höhe des Distanzkörpers 21 entspricht der Höhe der von der Seitenwand 13 und dem Quersteg 3a gebildeten Nutbegrenzung, so daß eine Stirnfläche 25 des Distanzkörpers 21 in Höhe der Oberseiten des Querstegs 3a sowie des Stegs 5a angeordnet ist.

Das als Scharnierband ausgebildete Beschlagteil 1a wird mit einer Anschlagfläche 26 zur Anlage an der Sichtfläche 15 des Rahmenholms gebracht, wobei sich eine Befestigungsplatte 7a in den Rahmenfalz hineinerstreckt und die Nut 4a teilweise überdeckt. Die Befestigungsplatte 7a weist an ihrer Unterseite eine erste Auflagefläche 10a sowie eine zweite Auflagefläche 11a auf, wobei die erste Auflagefläche 10a angrenzend an den Übergang zur Anschlagfläche 26 und die zweite Auflagefläche 11a am freien Ende der Befestigungsplatte 7a angeordnet ist. An die zweite Auflagefläche 11a grenzt eine Kehlung 27 an.

Nach dem Anlegen des Beschlagteils 1a an den Rahmenholm werden die Befestigungsplatte 7a und das Klemmstück 6a zueinander derart ausgerichtet, daß sich eine angesenkte Durchgangsbohrung 28 an der Befestigungsplatte 7a mit einer Gewindebohrung 29 des Klemmstücks 6a deckt. Anschließend werden die Befestigungsplatte 7a und das Klemmstück 6a mittels wenigstens einer Spannschraube 30 miteinander verbunden.

Zur Vereinfachung der Montage der Klemmvorrichtung können die Befestigungsplatte 7a und das Klemmstück 6a bereits werksseitig mittels der Spannschraube 30 miteinander verbunden ausgeliefert werden.

Die Durchgangsbohrung 28 kann einen größeren Durchmesser als der Schaft der Spannschraube 30 aufweisen, damit die nachfolgend geschilderte Bewegung des Klemmstücks 6a ohne Behinderung möglich ist.

Wenn die längs der Nut 4a frei verschiebliche Klemmvorrichtung in die Soll-Lage gebracht ist, wird zur Klemmbefestigung des Beschlagteils 1a die Spannschraube 30 betätigt. Dadurch hebt sich die Bodenseite 19 des Grundkörpers 16 an dem Klemmstück 6a von der Bodenwand 12 der Nut 4a ab, und das Klemmstück 6a gelangt mit der Klemmleiste 31 zur Anlage an der Unterseite des Querstegs 3a. Dabei führt der Grundkörper 16 des Klemmstücks 6a eine Kippbewegung bzw. eine Schwenkbewegung um das Drehlager aus, welches von der Rundung 17 des Kupplungsstegs 8a und der damit zusammenwirkenden Kehlung 27 der Befestigungsplatte 7a gebildet wird. Diese Drehbewegung führt zu einer Relativbewegung zwischen dem Grundkörper 16 des Klemmstücks 6a und dem einstückig mit dem Grundkörper 16 verbundenen Distanzkörper 21. Die Dehnfalte 22 der Querwandung 20 dient dabei zum Ausgleich der Änderung des Abstandes zwischen dem Distanzkörper 21 und dem Klemmstück 6a.

Bei fortgesetzter Betätigung der Spannschraube 30 und bei an der Unterseite des Querstegs 3a anliegendem Klemmstück 6a wird die erste Auflagefläche 10a auf den zugeordneten Quersteg 3a gedrückt und letzterer zwischen der ersten Auflagefläche 10a und der Klemmleiste 31 gepreßt. Infolgedessen wird die zweite Auflagefläche 11a auf die Stirnfläche 25 des Distanzkörpers 21 gedrückt, wodurch die Kerbvorsprünge 24 in das Material der Bodenwand 12 der Nut 4a eingedrückt werden. Der Distanzkörper 21 ist damit ortsfest in der Nut 4a fixiert. Aufgrund der Drehlagerung des Klemmstücks 6a in der Kehlung 27 der Befestigungsplatte 7a führen beide Bauteile eine definierte Relativbewegung aus. Dadurch wird sichergestellt, daß am Ende der Schwenkbewegung sowohl das Klemmstück 6a als auch die Befestigungsplatte 7a ihre Montage-Soll-Lage einnehmen.

Im Laufe seiner Schwenkbewegung kommt das an der Befestigungsplatte 7a abgestützte Klemmstück 6a an der Seitenwand 13 der Nut 4a zur Anlage, noch ehe die Klemmleiste des Klemmstücks 6a an der Unterseite des zugeordneten Querstegs 3a anschlägt. Bei fortgesetzter Schwenkbewegung des Klemmstücks 6a ist dieses zwischen der Kehlung 27 der Befestigungsplatte 7a und der Seitenwand 13 der Nut 4a eingespannt. Infolgedessen wird die Anschlagfläche 26 des Beschlagteils 1a an die Sichtfläche 15 des Rahmenholms gepreßt und gleichzeitig der Hintergriff der Klemmleiste des Klemmstücks 6a unter den zugeordneten Quersteg 3a gesichert. Unterstützt wird die Anpressung der Anschlagfläche 26 an die Sichtfläche 15 des Rahmenholms dadurch, daß die Ebene der zweiten Auflagefläche 11a gegenüber der Ebene der ersten Auflagefläche 10a geringfügig, beispielsweise um 0,2 mm bis 1,0 mm, zurückgesetzt angeordnet ist.

Die Klemmvorrichtung gemäß Figur 2 kann überall dort eingesetzt werden, wo die Nutöffnungsweite die Breite des Klemmstücks 6a übersteigt. Eine einzige Ausführungsform der Klemmvorrichtung eignet sich dabei unabhängig davon, um welches Maß die Nutöffnungsweite über die Klemmstückbreite hinausgeht. In Fällen, in denen die Nutöffnungsweite derart gering ist, daß die zweite Auflagefläche 11a der Befestigungsplatte 7a auf einem Quersteg einer Nut zur Auflage gelangt, kann die Anordnung nach Figur 2 abweichend von der Erfindung gleichwohl zur Anwendung kommen. In diesem Fall ist nämlich lediglich der Distanzkörper 21 von dem Klemmstück 6a zu trennen. Dies kann durch Abbrechen der Querwandung 20 insbesondere durch deren mehrmaliges Abbiegen erfolgen.

## Patentansprüche

1. Klemmvorrichtung zum Befestigen eines Beschlagteils (1, 1a) an einer wenigstens eine Hinterschneidung aufweisenden Nut (4, 4a) am Rahmen (2, 2a) eines Fensters, einer Tür od. dgl., wobei die Nut (4) eine Nutöffnung und einen Nutgrund aufweist und die Nutöffnung von Nutbegrenzungen in Form eines mit Abstand vom Nutgrund angeordneten Querstegs (3, 3a) sowie eines dem Quersteg (3, 3a) im Abstand der Nutöffnung gegenüberliegenden Stegs (5, 5a) begrenzt ist, mit einem an der dem Nutgrund zugewandten Unterseite des Querstegs (3, 3a) abstützbaren Klemmstück (6, 6a) sowie mit wenigstens einer mittels einer Spannvorrichtung gegen letzteres (6, 6a) spannbaren Befestigungsplatte (7, 7a), wobei das Klemmstück (6, 6a) an der Befestigungsplatte (7, 7a) relativ zu dieser schwenkbar gelagert und die Befestigungsplatte (7, 7a) über eine erste Auflagefläche (10, 10a) an der dem Klemmstück (6, 6a) abgewandten Seite des Querstegs (3, 3a) und über eine zweite, insbesondere an ihrem freien Ende angeordnete Auflagefläche (11, 11a) ebenfalls an dem Rahmen (2, 2a) abstützbar ist, **dadurch gekennzeichnet, daß** das Klemmstück (6, 6a) von den Nutbegrenzungen lediglich an dem Quersteg (3, 3a) und die Befestigungsplatte (7, 7a) über die zweite Auflagefläche (11, 11a) zwischen dem Quersteg (3, 3a) sowie dem letzterem (3, 3a) gegenüberliegenden Steg (5, 5a) am Nutgrund abstützbar ist, wobei das Klemmstück (6, 6a) an der ihm zugewandten Seite der Befestigungsplatte (7, 7a) gelagert ist.

2. Klemmvorrichtung nach Anspruch 1, **dadurch gekennzeichnet, daß** die zweite Auflagefläche (11) an einer in Montagelage in die Nutöffnung gegen den Nutgrund ragenden Stützleiste (9) der Befestigungsplatte (7) vorgesehen ist.

3. Klemmvorrichtung nach Anspruch 1, **dadurch gekennzeichnet, daß** die Befestigungsplatte (7a) an der zweiten Auflagefläche (11a) über einen sich am Nutgrund abstützenden Distanzkörper (21) am Nutgrund abstützbar ist.

4. Klemmvorrichtung nach Anspruch 3, **dadurch gekennzeichnet, daß** der Distanzkörper (21) über eine dünne und eine Dehnfalte (22) aufweisende Querwand (20) mit dem Klemmstück (6a) verbunden ist und letzteres (6a) mit einer Rundung (17) in einer entsprechenden Kehlung (27) an der ihm zugewandten Seite der Befestigungsplatte (7a) relativ zu dieser schwenkbar abgestützt ist.

5. Klemmvorrichtung nach Anspruch 3 oder 4, **dadurch gekennzeichnet, daß** eine dem Nutgrund zugewandte Unterfläche (23) des Distanzkörpers (21) mit Kerbvorsprüngen (24) versehen ist.

6. Klemmvorrichtung nach einem der Ansprüche 3 bis 5, **dadurch gekennzeichnet, daß** die Höhe des Distanzkörpers (21) senkrecht zum Nutgrund in etwa der Höhe der von einer Seitenwand (13) der Nut (4a) und dem Quersteg (3a) gebildeten Nutbegrenzung entspricht.

7. Klemmvorrichtung nach einem der Ansprüche 4 bis 6, **dadurch gekennzeichnet, daß** an dem Klemmstück (6a) die Rundung (17) an einem Kupplungssteg in Form einer von einem Grundkörper (16) des Klemmstücks (6a) vorstehenden Spannleiste (8a) vorgesehen ist.

8. Klemmvorrichtung nach Anspruch 1 oder 2, wobei das Klemmstück (6) über einen Kupplungssteg (8) an der Befestigungsplatte (7) relativ zu dieser schwenkbar gelagert ist, **dadurch gekennzeichnet, daß** das Klemmstück (6), die Befestigungsplatte (7) und der Kupplungssteg (8) materialeinheitlich hergestellt sind.

9. Klemmvorrichtung nach einem der Ansprüche 1, 2, 8, **dadurch gekennzeichnet, daß** das Klemmstück (6), die Befestigungsplatte (7) und der Kupplungssteg (8) als Strangpreßprofil einstückig hergestellt sind.

10. Klemmvorrichtung nach einem der Ansprüche 1, 2, 8, 9, **dadurch gekennzeichnet, daß** das Klemmstück (6), die Befestigungsplatte (7) und der Kupplungssteg (8) als Bauelementesatz von einem Profilstrang abgelängt sind.

11. Klemmvorrichtung nach einem der Ansprüche 1, 2 und 8 bis 10, **dadurch gekennzeichnet, daß** das Klemmstück (6), die Befestigungsplatte (7) und der Kupplungssteg (8) aus einer Aluminiumlegierung hergestellt sind.

12. Klemmvorrichtung nach einem der Ansprüche 4 bis 7, **dadurch gekennzeichnet, daß** das Klemmstück (6a), der Distanzkörper (21) und die Querwandung (20) materialeinheitlich und einstückig ausgebildet sind.

13. Klemmvorrichtung nach einem der Ansprüche 4 bis 7 und 12, **dadurch gekennzeichnet, daß** das Klemmstück (6a), der Distanzkörper (21) und die Querwandung (20) als Strangpreßprofil einstückig hergestellt sind.

14. Klemmvorrichtung nach einem der Ansprüche 4 bis 7, 12, 13, **dadurch gekennzeichnet, daß** das Klemmstück (6a), der Distanzkörper (21) und die Querwandung (20) als Bauelementesatz von einem Profilstrang abgelängt sind.

15. Klemmvorrichtung nach einem der Ansprüche 4 bis 7 und 12 bis 14, **dadurch gekennzeichnet, daß** die Querwandung (20) angrenzend an eine Bodenseite (19) des Grundkörpers (16) des Klemmstücks (6a) angeordnet ist.

16. Verfahren zur Herstellung einer Klemmvorrichtung nach einem der Ansprüche 8 bis 11, **dadurch gekennzeichnet, daß** die Befestigungsplatte (7), das Klemmstück (6) und der Kupplungssteg (8) durch eine gemeinsame Düse zusammenhängend und materialeinheitlich in Form eines Profilstrangs stranggepreßt werden, daß vor oder nach dem anschließenden Abtrennen von aus einer Befestigungsplatte (7), einem Klemmstück (6) und einem Kupplungssteg (8) bestehenden Bauelementesätzen vom Profilstrang dieser in diejenige Lage gebracht wird, in der die Befestigungsplatte (7), das Klemmstück (6) und der Kupplungssteg (8) bzw. die für diese Bauteile vorgesehenen Teile des Profilstrangs in etwa ihre Einbaulage zueinander einnehmen und daß dann für jeden Bauelementesatz in der Befestigungsplatte (7) eine insbesondere mit einer Senkung versehene Durchgangsbohrung für eine Spannschraube der Klemmvorrichtung und im Klemmstück (6) eine Gewindebohrung für die Spannschraube hergestellt und abschließend die Spannschraube eingedreht wird.

17. Verfahren nach Anspruch 16, **dadurch gekennzeichnet, daß** die Durchgangsbohrung und die Gewindebohrung für die Spannschraube in einem Arbeitsgang gefertigt werden.

## Claims

1. Clamping apparatus for mounting a fitting (1, 1a) on a groove (4, 4a), which has at least one undercut portion, on the frame (2, 2a) of a window, a door or the like, the groove opening being defined by groove boundaries in the form of a first transverse web (3, 3a), which is disposed at a spacing from the groove base, and in the form of a second web (5, 5a), which is situated opposite the first transverse web (3,3a) at a spacing from the groove opening, said apparatus having a clamping part (6, 6a), which is supportable on the underside of the first transverse web (3, 3a) facing the groove base, as well as having at least one mounting plate (7, 7a), which can be tensioned relative to said clamping part (6, 6a) by means of a tensioning device, the mounting plate (7, 7a) being supportable on the side of the first transverse web (3, 3a) remote from the clamping part (6, 6a) via a first bearing surface (10, 10a) and also being supportable on the frame (2, 2a) between the first transverse web (3, 3a) and the second transverse web (5, 5a), situated opposite said first transverse web (3, 3a), on the groove base via a second bearing surface (11, 11a) disposed more especially on its free end, **characterised in that** the clamping part (6, 6a) is supportable by the groove boundaries only on the first transverse web (3, 3a), the clamping part (6, 6a) being mounted on the side of the mounting plate (7, 7a) facing it so as to be pivotable relative to said plate.

2. Clamping apparatus according to claim 1, **characterised in that** the second bearing surface (11) is provided on a supporting bar (9) of the mounting plate (7), said bar protruding into the groove opening towards the groove base in the assembled position.

3. Clamping apparatus according to claim 1, **characterised in that** the mounting plate (7a) is supportable on the second bearing surface (11a) via a spacer member (21) on the groove base, which member is supported on the groove base.

4. Clamping apparatus according to claim 3, **characterised in that** the spacer member (21) is connected to the clamping part (6a) via a thin transverse wall (20), which includes an expansion fold (22), and said clamping part (6a) is supported on the side of the mounting plate (7a), facing it, by a rounded portion (17) in a corresponding moulding (27) so as to be pivotable relative to said plate.

5. Clamping apparatus according to claim 3 or 4, **characterised in that** an underface (23) of the spacer member (21) facing the groove base is provided with notched projection members (24).

6. Clamping apparatus according to one of claims 3 - 5, **characterised in that** the height of the spacer member (21) perpendicular to the groove base corresponds substantially to the height of the groove boundary formed by a lateral wall (13) of the groove (4a) and by the transverse web (3a).

7. Clamping apparatus according to one of claims 4 - 6, **characterised in that** the rounded portion (17) on a coupling web, in the form of a tensioning bar (8a) which protrudes from a basic body member (16) of the clamping part (6a), is provided on the clamping part (6a).

8. Clamping apparatus according to claim 1 or 2, the clamping part (6) being mounted on the mounting plate (7) via a coupling web (8) so as to be pivotable relative to said plate, **characterised in that** the clamping part (6), the mounting plate (7) and the coupling web (8) are produced from identical material.

9. Clamping apparatus according to one of claims 1, 2 or 8, **characterised in that** the clamping part (6), the mounting plate (7) and the coupling web (8) are produced integrally as an extruded profile.

10. Clamping apparatus according to one of claims 1, 2, 8 or 9, **characterised in that** the clamping part (6), the mounting plate (7) and the coupling web (8) are cut-to-length from an extruded profile as a set of component parts.

11. Clamping apparatus according to one of claims 1, 2, 8 - 10, **characterised in that** the clamping part (6), the mounting plate (7) and the coupling web (8) are produced from an aluminium alloy.

12. Clamping apparatus according to claim 4, **characterised in that** the clamping part (6a), the spacer member (21) and the transverse wall (20) are formed from identical material and integrally.

13. Clamping apparatus according to one of claims 4 or 12, **characterised in that** the clamping part (6a), the spacer member (21) and the transverse wall (20) are produced integrally as an extruded profile.

14. Clamping apparatus according to one of claims 4, 12 and 13, **characterised in that** the clamping part (6a), the spacer member (21) and the transverse wall (20) are cut-to-length from an extruded profile as a set of component parts.

15. Clamping apparatus according to one of claims 4, 12 - 14, **characterised in that** the transverse wall (20) is disposed adjacent to a bottom side (19) of the basic body member (16) of the clamping part (6a).

16. Method of producing a clamping apparatus according to one of claims 8 - 11, **characterised in that** the mounting plate (7), the clamping part (6) and the coupling web (8) are extruded in the form of an extruded profile through a common nozzle so as to be continuous and of identical material, **in that**, prior to or after the subsequent separation of sets of component parts, which comprise a mounting plate (7), a clamping part (6) and a coupling web (8), from the extruded profile, said profile is brought into the position in which the mounting plate (7), the clamping part (6) and the coupling web (8), or respectively the parts of the extruded profile which are provided for these component parts, assume substantially their installation position relative to one another, and **in that** then, for each set of component parts, a through-bore, which is provided more especially with a depression, for a tightening screw of the clamping apparatus is produced in the mounting plate (7), and a threaded bore for the tightening screw is produced in the clamping part (6), and finally the tightening screw is screwed-in.

17. Method according to claim 16, **characterised in that** the through-bore and the threaded bore for the tightening screw are formed in one operation.

## Revendications

1. Dispositif de fixation par serrage d'une pièce de ferrure (1, 1a) dans au moins une rainure (4, 4a) présentant une partie en contre-dépouille d'un châssis (2, 2a) d'une fenêtre, une porte ou analogues,
l'ouverture de la rainure étant délimitée par des limites de rainure sous la forme d'un premier rebord (3, 3a) à une certaine distance du fond de la rainure ainsi que d'un second rebord (5, 5a) en regard du premier rebord (3, 3a) à une certaine distance de l'ouverture de la rainure,
comprenant une pièce de serrage (6, 6a) qui s'appuie contre la face inférieure du premier rebord (3, 3a) tourné vers le fond de la rainure ainsi qu'au moins une plaque de fixation (7, 7a) qui peut se serrer contre la pièce de serrage (6, 6a) par un dispositif de serrage,
la plaque de fixation (7, 7a) étant appuyée par une première surface d'appui (10, 10a) contre la face du premier rebord (3, 3a) à l'opposé de celui recevant la pièce de serrage (6, 6a) et par une seconde surface d'appui (11, 11a) prévue notamment à son extrémité libre, également en appui contre le châssis (2, 2a), entre le premier rebord (3, 3a) et le second rebord (5, 5a) à l'opposé du premier (3, 3a), contre le fond de la rainure,
**caractérisé en ce que**
la pièce de serrage (6, 6a) est appuyée au niveau des limites de la rainure, uniquement contre le premier rebord (3, 3a), la pièce de serrage (6, 6a) étant reliée par son extrémité tournée vers la plaque de fixation (7, 7a), d'une manière articulée par rapport à celle-ci.

2. Dispositif de fixation par serrage selon la revendication 1,
**caractérisé en ce que**
la seconde surface d'appui (11) est prévue sur un longeron d'appui (9), qui en position de montage, pénètre dans l'ouverture de la rainure contre le fond de la rainure, ce longeron d'appui (9) appartenant à la plaque de fixation (7).

3. Dispositif de fixation par serrage selon la revendication 1,
**caractérisé en ce que**
la plaque de fixation (7a) s'appuie contre le fond de la rainure par l'intermédiaire d'un organe d'écartement (21) appliqué contre le fond de la rainure.

4. Dispositif de fixation par serrage selon la revendication 3,
**caractérisé en ce que**
l'organe d'écartement (21) est relié par une cloison transversale (20), mince, ayant un pli de dilatation (22), à la pièce de serrage (6a) et cette dernière (6a) est appuyée par un arrondi (17) dans une gorge (27) correspondante du côté de la plaque de fixation (7a) tournée vers cet arrondi, selon un appui permettant un pivotement relatif.

5. Dispositif de fixation de serrage selon la revendication 3 ou 4,
**caractérisé en ce qu'**
une surface (23) de l'organe d'écartement (21) tourné vers le fond de la rainure comporte des saillies en forme de nervures (24).

6. Dispositif de fixation de serrage selon quelconque des revendications 3 à 5,
**caractérisée en ce que**
la hauteur de l'organe d'écartement (21) perpendiculairement au fond de la rainure correspond sensiblement à la hauteur de la limitation de la rainure formée par une paroi latérale (13) de la rainure (4a) et le rebord (3a).

7. Dispositif de fixation par serrage selon l'une quelconque des revendications 4 à 6,
**caractérisé en ce que**
l'arrondi (17) est prévu sur une branche de couplage sous la forme d'un longeron de serrage (8a) en saillie par rapport au corps de base (16) de la pièce de serrage (6a).

8. Dispositif de fixation par serrage selon l'une des revendications 1 ou 2, dans laquelle la pièce serrage (6) est montée pivotante par rapport à la plaque de fixation (7) par l'intermédiaire d'une branche de couplage (8),
**caractérisé en ce que**
la pièce de serrage (6), la plaque de fixation (7) et la branche de couplage (8) sont réalisées en une seule matière.

9. Dispositif de fixation par serrage selon l'une quelconque des revendications 1, 2 ou 8,
**caractérisé en ce que**
la pièce de serrage (6), la plaque de fixation (7) et la branche de couplage (8) sont réalisées en une seule pièce sous la forme d'un profilé extrudé.

10. Dispositif de fixation par serrage selon l'une quelconque des revendications 1, 2, 8 ou 9,
**caractérisé en ce que**
la pièce de serrage (6), la plaque de fixation (7) et la branche de couplage (8) sont coupées à la longueur à partir d'un profilé, comme jeu d'éléments de construction.

11. Dispositif de fixation par serrage selon l'une quelconque des revendications 1, 2, 8-10,
**caractérisé en ce que**
la pièce de serrage (6), la plaque de fixation (7) et la branche de couplage (8) sont réalisées en un alliage d'aluminium.

12. Dispositif de fixation par serrage selon la revendication 4,
**caractérisé en ce que**
la pièce de serrage (6a), l'organe d'écartement (21) et la cloison transversale (20) sont réalisés dans la même matière et en une seule pièce.

13. Dispositif de fixation par serrage selon l'une des revendications 4 ou 12,
**caractérisé en ce que**
la pièce de serrage (6a), l'organe d'écartement (21) et la cloison transversale (20) sont réalisés en une seule pièce sous la forme d'un profilé extrudé.

14. Dispositif de fixation par serrage selon l'une quelconque des revendications 4, 12, 13,
**caractérisé en ce que**
la pièce de serrage (6a), l'organe d'écartement (21) et la cloison transversale (20) sont coupés à la longueur comme jeu d'éléments de construction à partir d'un profilé.

15. Dispositif de fixation par serrage selon l'une quelconque des revendications 4, 12-14,
**caractérisé en ce que**
la cloison transversale (20) est prévue de façon adjacente à un côté (19) du fond du corps de base (16) de la pièce de serrage (6a).

16. Procédé de fabrication d'un dispositif de serrage selon l'une quelconque des revendications 8-11,
**caractérisé en ce qu'**
on réalise à la presse un profilé comprenant la plaque de fixation (7), la pièce de serrage (6) et la branche de couplage (8) à l'aide d'une buse d'extrusion commune,
et avant ou après la coupure de jeu d'éléments de construction formé d'une plaque de fixation (7), une pièce de serrage (6) et d'une branche de couplage (8) par rapport au profilé, on place celui-ci dans une position dans laquelle la plaque de fixation (7), la pièce de serrage (6) et la branche de couplage (8) ou les pièces du profilé qui correspondent à ces éléments prennent sensiblement leur position on réalise de montage, et ensuite pour chaque jeu d'éléments de construction dans la plaque de fixation (7), un perçage traversant en particulier muni d'un avant-trou pour une vis de serrage du dispositif de serrage, et dans la pièce de serrage (6), on réalise un taraudage pour la vis de serrage et ensuite on visse la vis de serrage.

17. Procédé selon la revendication 16,
**caractérisé en ce que**
l'on réalise le perçage traversant et le perçage fileté de la vis de serrage au cours d'une même opération.
